# FASCICULE DE BREVET EUROPEEN

(11) **EP 2 736 752 B1**
(45) Date de publication et mention de la délivrance du brevet: **04.04.2018**
(21) Numéro de dépôt: 12743368.8
(22) Date de dépôt: 11.07.2012
(51) Int. Cl.: B60K 35/00, B60K 37/02, B29C 45/16, B60K 37/00, B60R 13/02

(54) **ELEMENT DECORATIF ET DE COUVRAGE, TABLEAU DE BORD ET PROCEDE DE FABRICATION D'UN ELEMENT DECORATIF**
DEKORATIVES UND ABDECKELEMENT, INSTRUMENTENTAFEL UND VERFAHREN ZUR HERSTELLUNG EINES DEKORATIVEN ELEMENTS
DECORATIVE AND COVERING ELEMENT, INSTRUMENT PANEL AND METHOD FOR MANUFACTURING A DECORATIVE ELEMENT

(30) Priorité: 30.07.2011 DE 102011109018; 04.01.2012 FR 1200022
(43) Date de publication de la demande: 04.06.2014
(73) Titulaire: Johnson Controls Automotive Electronics SAS, 95892 Cergy-Pontoise Cedex (FR)
(72) Inventeur: GUILLAUMINAUD, Frédéric, F-95800 Cergy Le Haut (FR)
(74) Mandataire: Schwöbel, Thilo K.
(86) Numéro de dépôt international: PCT/EP2012/002919
(87) Numéro de publication internationale: WO 2013/017195

(56) Documents cités:
- EP-A1- 1 072 383
- WO-A2-2008/016749
- DE-A1-102008 041 701
- US-A1- 2006 037 794

## Description

La présente invention concerne un élément décoratif et de couvrage, un tableau de bord, notamment pour un véhicule automobile, et un procédé de fabrication d'un élément décoratif et de couvrage.

Des éléments décoratifs et de couvrage sont connus, notamment pour les tableaux de bord et notamment pour de véhicules automobiles.

Par ailleurs, il est connu de couvrir un élément d'affichage ou un modul d'affichage, notamment un élément d'affichage ou un modul d'affichage matriciel de telle manière que le élément d'affichage ou que le modul d'affichage n'est pas visible lorsque celui-ci est éteint. Une telle réalisation peut être obtenue par l'intermédiaire d'un élément de couvrage ayant de propriétés optiques telles que la transparence est réduite, par exemple en utilisant des pigments noirs. Un tel élément de couvrage est - par exemple - connu de la publication DE 198 44 773. Un élément décoratif comprenant les caractéristiques du préambule de la revendication 1 est connu du document WO 2008/016749 A2.

Un tel élément de couvrage prévoit que la partie à couvrir l'élément d'affichage ou le modul d'affichage est d'abord fabriquée, et que pendant une étape ultérieure, l'élément de couvrage est attaché à l'élément d'affichage ou le modul d'affichage.

Un tel procédé de fabrication a pour conséquence que des tolérances d'assemblage peuvent avoir un effet négatif à l'aspect esthétique d'un tel élément de couvrage ou à l'assemblage de l'élément de couvrage et l'élément d'affichage ou le modul d'affichage.

La présente invention a notamment pour but de pallier aux inconvénients de l'art connu, et notamment ceux cités ci-dessus, et a également pour but de proposer un élément décoratif et de couvrage ainsi qu'un tableau de bord d'un véhicule qui peut être réalisé de manière simple et efficace et qui a un aspect esthétique avantageux.

Suivant l'invention, ce but est atteint par un élément décoratif et de couvrage, notamment pour l'usage liée à un tableau de bord d'un véhicule automobile, selon la revendication 1. De par une telle réalisation de l'élément décoratif et de couvrage, il est avantageusement possible de réduire ou de supprimer les tolérances d'assemblages entre la première partie de l'élément décoratif et de couvrage et la deuxième partie de l'élément décoratif et de couvrage. Ceci permet non seulement d'améliorer l'aspect esthétique de l'élément décoratif et de couvrage notamment lorsque la deuxième partie de l'élément décoratif et de couvrage est illuminée, mais permet auss de réduire les coûts associés à l'élément décoratif et de couvrage.

Un perfectionnement préféré de l'invention réside dans le fait que la première partie de l'élément décoratif et de couvrage et la deuxième partie de l'élément décoratif et de couvrage sont réalisé par l'intermédiaire d'un moulage par injection à deux étapes.

Selon un mode de réalisation préféré de l'élément décoratif et de couvrage selon la présente invention, la première partie de l'élément décoratif et de couvrage et la deuxième partie de l'élément décoratif et de couvrage sont réalisé par l'intermédiaire d'un moulage par injection à deux composantes.

De par de telles réalisations de l'élément décoratif et de couvrage inventif, il est avantageusement possible de minimiser les efforts pour fabriquer l'élément décoratif et de couvrage et de réduire au maximum les tolérances d'assemblage.

Selon un mode de réalisation préférée de la présente invention, il est prévu que le deuxième matériau a la propriété d'être transparent ou que le deuxième matériau a la propriété d'être d'une transparence réduite.

Ainsi, il est avantageusement possible selon la présente invention d'obtenir un effect d'écran noir (en anglais : black panel effect).

Un autre perfectionnement préféré de l'invention réside dans le fait que le premier matériau comprend
-- le polyméthacrylate de méthyle (PMMA)
   et/ou
-- le polycarbonate (PC).
ou une composition de ces matériaux.

De par une telle réalisation du tableau de bord inventif, il est avantageusement possible de conférer à la première partie de l'élément décoratif et de couvrage une transparence souhaitée, notamment pour réaliser des régions de cadran ou d'affichage d'éléments optiques d'alerte ou d'information pour un utilisateur d'un tableau de bord de véhicule automobile.

Selon un mode de réalisation préféré de l'élément décoratif selon la présente invention, le deuxième matériau comprend
-- le polyméthacrylate de méthyle (PMMA)
   et/ou
-- le polycarbonate (PC).
ou une composition de ces matériaux, notamment en variante de transparence réduite ou diffusante.

De par une telle réalisation du tableau de bord inventif, il est avantageusement possible de prévoir la deuxième partie de l'élément décoratif et de couvrage telle que la deuxième partie de l'élément décoratif et de couvrage est compatible avec la première partie de l'élément décoratif et de couvrage.

La présente invention concerne également un tableau de bord de véhicule automobile comprenant au moins un élément décoratif et de couvrage inventif.

De par une telle réalisation, il est avantageusement possible d'augmenter le niveau de sécurité du véhicule automobile car l'utilisateur, notamment le conducteur du véhicule automobile, peut se concentrer sur les informations importantes, notamment lorsque de tels informations ne sont pas affichées dans un état éteint du modul d'affichage ou de l'élément d'affichage qui est couvert par la deuxième partie de l'élément décoratif et de couvrage selon la présente invention.

De par une telle réalisation du procédé d'affichage, il est avantageusement possible de réaliser un affichage ayant un aspect esthétique avantageux.

La présente invention concerne par ailleurs un procédé de fabrication d'un élément décoratif et de couvrage inventif, le procédé comprenant l'étape suivante:
-- dans une étape du procédé, la première partie et la deuxième partie de l'élément décoratif et de couvrage sont réalisées par l'intermédiaire d'un moulage par injection à deux étapes ou par l'intermédiaire d'un moulage par injection à deux composantes.

D'autres caractéristiques et avantages de l'invention ressortiront à la lecture de la description qui suit d'un mode de réalisation particulier non limitatif de l'invention.

### BREVE DESCRIPTION DES DESSINS

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :
la figure 1 est une vue de face schématique d'un élément décoratif et de couvrage selon la présente invention,
la figure 2 est une vue de section schématique d'un élément décoratif et de couvrage selon la présente invention,

### DESCRIPTION DES DESSINS

Un dispositif d'affichage selon la présente invention comprend normalement une surface d'affichage, notamment comprenant au moins un cadran, ainsi qu'une surface d'affichage pour un élément d'affichage ou un modul d'affichage tel qu'un élément d'affichage matriciel ou un modul d'affichage matriciel.

Dans la partie du tableau de bord dans laquelle se trouve l'élément d'affichage ou le modul d'affichage, il est souvent préféré d'obtenir un effect à écran noir (en anglais : black screen effect).

Pour obtenir l'effet d'écran noir, il est possible d'utiliser un film qui va être appliqué au moins dans la région de l'élément d'affichage ou du modul d'affichage. Selon la présente invention, il est proposé d'éviter l'utilisation d'un tel film et d'intégrer la fonction d'un tel film avec un élément décoratif et de couvrage 1 qui couvre par exemple toute la surface du tableau de bord du véhicule automobile.

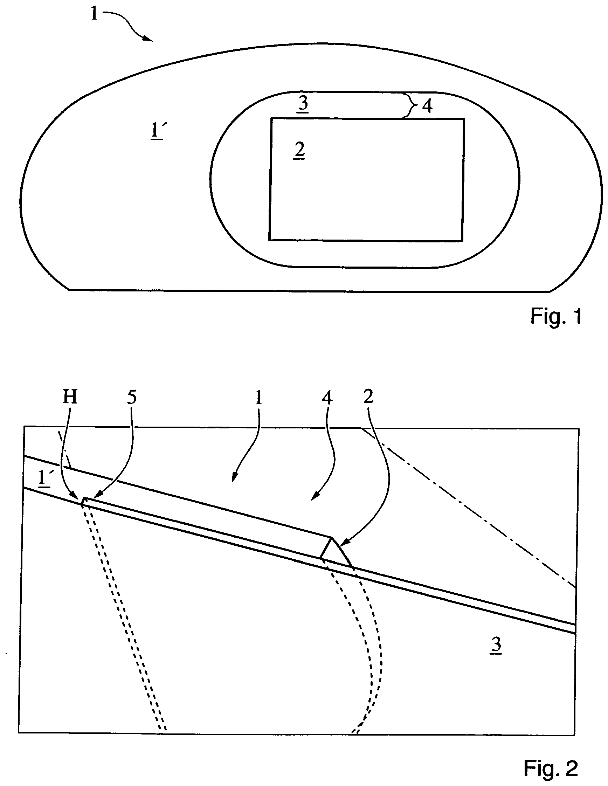

Selon la présente invention, il est proposé de réaliser l'élément décoratif et de couvrage 1 ayant une première partie 1' et une deuxième partie 3 comme le montre la figure 1 du dessin annexé.

La figure 1 montre une vue schématique de face d'un tel élément décoratif et de couvrage 1 selon la présente invention. L'élément décoratif et de couvrage 1 selon la présente invention comprend dans sa deuxième partie 3 une région dans laquelle l'élément décoratif et de couvrage 1 couvre un élément d'affichage ou un modul d'affichage (non représenté dans les figures annexées).

La première partie 1' de l'élément décoratif et de couvrage 1 comprend de préférence un évidement 2 adapté pour couvrir un élément d'affichage ou un modul d'affichage (non représenté).

Dans une partie de connexion ou de liaison 4, la première partie 1' et la deuxième partie de l'élément décoratif et de couvrage 1 sont liée, notamment en formant une seule pièce.

La figure 2 montre l'élément décoratif et de couvrage 1 dans une représentation de coupe et de perspective.

L'élément décoratif et de couvrage 1 comprend une première partie 1' et une deuxième partie. La première partie 1' de l'élément décoratif et de couvrage 1 comprend un premier matériau et la deuxième partie 3 de l'élément décoratif et de couvrage 1 comprend un deuxième matériau. Le premier matériau est notamment différent du deuxième matériau quant à ses propriétés physiques et/ou chimiques.

Par exemple, le premier matériau comprend
-- le polyméthacrylate de méthyle (PMMA)
   et/ou
-- le polycarbonate (PC).
ou une composition de ces matériaux.

Par exemple, le deuxième matériau comprend également le polyméthacrylate de méthyle (PMMA) ou Polycarbonate (PC) en variante de transparence ou diffusante.

Selon la présente invention, la première partie 1' est optiquement plus transparente, notamment complètement transparent (par rapport à la transparence possible avec le premier matériau, et la deuxième partie 3 est optiquement moins transparente, notamment ayant une transparence entre 10% et 60%, de préférence entre 20% et 40% pour obtenir un effet d'écran noir dans la région de l'élément d'affichage ou du modul d'affichage.

Comme l'on peut voir dans la figure 2, la deuxième partie 3 de l'élément décoratif et de couvrage 1 a une épaisseur plus petite par rapport à l'épaisseur de la première partie 1' de l'élément décoratif et de couvrage 1.

Au bord de la deuxième partie 3 de l'élément décoratif et de couvrage 1, la première partie 1' comprend notamment un épaulement 5 ayant une hauteur H tel que la première partie 1' et la deuxième partie 3 de l'élément décoratif et de couvrage 1 forment une surface extérieure (c'est-à-dire une surface qui est visible par un utilisateur du véhicule automobile) plane et ésthétiquement favorable ainsi que téchniquement convenable, notamment quant aux propriétés optiques au bord de la deuxième partie 3 de l'élément décoratif et de couvrage 1.

Par ailleurs, la figure 2 montre l'évidement 2 du premier matériau (c'est-à-dire de la première partie 1' de l'élément décoratif et de couvrage 1) pour acqueillir un élément d'affichage ou un modul d'affichage.

Dans le contexte de la présente invention, le deuxième matériau est de préférence un matériau qui est transparent, mais d'une transparence réduite telle qu'un effet à écran noir peut être réalisé, notamment à l'endroit d'un élément d'affichage ou d'un modul d'affichage.

Il est préféré que les deux parties 1', 3 de l'élément décoratif et de couvrage 1 sont fabriquées par l'intermédiaire d'un moulage par injection à deux étapes ou par l'intermédiaire d'un moulage par injection à deux composante. Il est également possible que l'élément décoratif et de couvrage est réalisé par l'intermédiaire d'un moulage par injection à trois (ou plus d') étapes ou par l'intermédiaire d'un moulage par injection à trois (ou plus de) composante.

### Liste des signes de référence

- 1: élément décoratif et de couvrage
- 1': première partie de l'élément décoratif et de couvrage
- 3: deuxième partie de l'élément décoratif et de couvrage
- 4: région de liaison
- 5: épaulement
- H: hauteur

## Revendications

1. Élément décoratif et de couvrage (1), notamment pour l'usage liée à un tableau de bord d'un véhicule automobile, l'élément décoratif et de couvrage (1) comprenant une première partie (1') et une deuxième partie (3), la première partie (1') de l'élément décoratif et de couvrage (1) étant réalisée d'un premier matériau transparent, la deuxième partie (3) de l'élément décoratif et de couvrage (1) étant réalisée d'un deuxième matériau, la première partie (1') de l'élément décoratif et de couvrage (1) et la deuxième partie (3) de l'élément décoratif et de couvrage (1) étant réalisées d'une seule pièce, **caractérisé , en ce que** l'élément décoratif et de couvrage (1) comprend dans sa deuxième partie (3) une région dans laquelle l'élément décoratif et de couvrage (1) est prévu pour couvrir un élément d'affichage ou un module d'affichage.

2. Elément décoratif et de couvrage (1) selon la revendication 1, **caractérisé en ce que** la première partie (1') de l'élément décoratif et de couvrage (1) et la deuxième partie (3) de l'élément décoratif et de couvrage (1) sont réalisé par l'intermédiaire d'un moulage par injection à deux étapes.

3. Elément décoratif et de couvrage (1) selon l'une quelconque des revendications précédentes, **caractérisé en ce que** la première partie (1') de l'élément décoratif et de couvrage (1) et la deuxième partie (3) de l'élément décoratif et de couvrage (1) sont réalisé par l'intermédiaire d'un moulage par injection à deux composantes.

4. Elément décoratif et de couvrage (1) selon l'une quelconque des revendications précédentes, **caractérisé en ce que** le deuxième matériau a la propriété d'être transparent ou que le deuxième matériau a la propriété d'être d'une transparence réduite.

5. Elément décoratif et de couvrage (1) selon l'une quelconque des revendications précédentes, **caractérisé en ce que** le premier matériau comprend
-- le polyméthacrylate de méthyle (PMMA)
et/ou
-- le polycarbonate (PC).
ou une composition de ces matériaux.

6. Elément décoratif et de couvrage (1) selon l'une quelconque des revendications précédentes, **caractérisé en ce que** le deuxième matériau comprend
-- le polyméthacrylate de méthyle (PMMA)
et/ou
-- le polycarbonate (PC).
ou une composition de ces matériaux, notamment en variante de transparence réduite ou diffusante.

7. Tableau de bord de véhicule automobile comprenant au moins un élément décoratif (1) selon l'une quelconque des revendications 1 à 6,

8. Procédé de fabrication d'un élément décoratif (1) selon l'une quelconque des revendications 1 à 6, **caractérisé en ce que**
-- dans une étape du procédé, la première partie (1') et la deuxième partie (3) de l'élément décoratif et de couvrage (1) sont réalisées par l'intermédiaire d'un moulage par injection à deux étapes ou par l'intermédiaire d'un moulage par injection à deux composantes.

## Patentansprüche

1. Dekor- und Abdeckelement (1), insbesondere für die Nutzung in Verbindung mit einer Instrumententafel eines Kraftfahrzeugs, wobei das Dekor- und Abdeckelement (1) einen ersten Teil (1') und einen zweiten Teil (3) umfasst, wobei der erste Teil (1') des Dekor- und Abdeckelements (1) aus einem ersten transparenten Material hergestellt ist, wobei der zweite Teil (3) des Dekor- und Abdeckelements (1) aus einem zweiten Material hergestellt ist, wobei der erste Teil (1') des Dekor- und Abdeckelements (1) und der zweite Teil (3) des Dekor- und Abdeckelements (1) aus einem Stück hergestellt sind, **dadurch gekennzeichnet, dass** das Dekor- und Abdeckelement (1) in seinem zweiten Teil (3) einen Bereich umfasst, in dem das Dekor- und Abdeckelement (1) dazu vorgesehen ist, ein Anzeigeelement oder ein Anzeigemodul abzudecken.

2. Dekor- und Abdeckelement (1) nach Anspruch 1, **dadurch gekennzeichnet, dass** der erste Teil (1') des Dekor- und Abdeckelements (1) und der zweite Teil (3) des Dekor- und Abdeckelements (1) durch Spritzguss in zwei Schritten hergestellt sind.

3. Dekor- und Abdeckelement (1) nach einem der vorhergehenden Ansprüche, **dadurch gekennzeichnet, dass** der erste Teil (1') des Dekor- und Abdeckelements (1) und der zweite Teil (3) des Dekor- und Abdeckelements (1) durch Spritzguss mit zwei Komponenten hergestellt sind.

4. Dekor- und Abdeckelement (1) nach einem der vorhergehenden Ansprüche, **dadurch gekennzeichnet, dass** das zweite Material die Eigenschaft hat, transparent zu sein, oder dass das zweite Material die Eigenschaft hat, von reduzierter Transparenz zu sein.

5. Dekor- und Abdeckelement (1) nach einem der vorhergehenden Ansprüche, **dadurch gekennzeichnet, dass** das erste Material umfasst
- Polymethylmethacrylat (PMMA)
und/oder
- Polycarbonat (PC)
oder eine Zusammensetzung dieser Materialien.

6. Dekor- und Abdeckelement (1) nach einem der vorhergehenden Ansprüche, **dadurch gekennzeichnet, dass** das zweite Material umfasst
- Polymethylmethacrylat (PMMA)
und/oder
- Polycarbonat (PC)
oder eine Zusammensetzung dieser Materialien, insbesondere als Variante mit reduzierter oder streuender Transparenz.

7. Instrumententafel eines Kraftfahrzeugs, umfassend mindestens ein Dekorelement (1) nach einem der vorhergehenden Ansprüche.

8. Verfahren zur Herstellung eines Dekorelements (1) nach einem der Ansprüche 1 bis 6, **dadurch gekennzeichnet, dass**
- bei einem Schritt des Verfahrens der erste Teil (1') und der zweite Teil (3) des Dekor- und Abdeckelements (1) durch Spritzguss in zwei Schritten oder durch Spritzguss mit zwei Komponenten hergestellt sind.

## Claims

1. Decorative and covering element (1), especially for use associated with an instrument panel of a motor vehicle, the decorative and covering element (1) comprising a first portion (1') and a second portion (3), the first portion (1') of the decorative and covering element (1) being produced from a first transparent material, the second portion (3) of the decorative and covering element (1) being produced from a second material, the first portion (1') of the decorative and covering element (1) and the second portion (3) of the decorative and covering element (1) being produced from a single part, **characterized in that** the decorative and covering element (1) comprises, in the second portion (3) thereof, a region in which the decorative and covering element (1) is intended to cover a display element or a display module.

2. Decorative and covering element (1) according to Claim 1, **characterized in that** the first portion (1') of the decorative and covering element (1) and the second portion (3) of the decorative and covering element (1) are produced by means of two-stage injection moulding.

3. Decorative and covering element (1) according to either one of the preceding claims, **characterized in that** the first portion (1') of the decorative and covering element (1) and the second portion (3) of the decorative and covering element (1) are produced by means of two-component injection moulding.

4. Decorative and covering element (1) according to any one of the preceding claims, **characterized in that** the second material has the property of being transparent or that the second material has the property of having reduced transparency.

5. Decorative and covering element (1) according to any one of the preceding claims, **characterized in that** the first material comprises
-- polymethyl methacrylate (PMMA)
and/or
-- polycarbonate (PC)
or a composition of these materials.

6. Decorative and covering element (1) according to any one of the preceding claims, **characterized in that** the second material comprises
-- polymethyl methacrylate (PMMA)
and/or
-- polycarbonate (PC)
or a composition of these materials, especially as a diffusing or reduced transparency variant.

7. Motor vehicle instrument panel comprising at least one decorative element (1) according to any one of the preceding claims.

8. Method for manufacturing a decorative element (1) according to any one of Claims 1 to 6, **characterized in that**
-- in one step of the method, the first portion (1') and the second portion (3) of the decorative and covering element (1) are produced by means of two-stage injection moulding or by means of two-component injection moulding.
